# EUROPEAN PATENT SPECIFICATION

(11) **EP 2 317 871 B1**
(45) Date of publication and mention of the grant of the patent: **06.09.2017**
(21) Application number: 08794188.6
(22) Date of filing: 31.07.2008
(51) Int. Cl.: A23K 20/111, A23K 20/158, A23K 20/163, A23K 50/75

(54) **FEED FOR POULTRY AND SWINE**
GEFLÜGEL- UND SCHWEINEFUTTER
ALIMENT POUR VOLAILLES ET PORCS

(43) Date of publication of application: 11.05.2011
(73) Proprietor: The Thailand Research Fund, Bangkok 10400 (TH); Kasetsart University, Bangkok 10900 (TH); Better Pharma Co., Ltd., Laksi, Bangkok 10120 (TH); Axis IP Holding Pte Ltd., Singapore 117628 (SG)
(72) Inventor: PARASKA, Nuanchan, Nakornpathom 73140 (TH); SONGSAEM, Taweesak, Nakornpathom 73140 (TH); SONGSAEM, Ompraphan, Nakornpathom 73140 (TH); SINDHUVANICH, Sirinporn, Nakornpathom 73140 (TH); WITTAYA-AREEKUL, Sakchai, Phisanulok 65000 (TH); PHUMALA MORALES, Noppawan, Thailand 10400 (TH); PITAKSUTEEPONG, Tasana, Phisanulok 65000 (TH); OUNARUN, Anan, Phisanulok 65000 (TH); TANGSUMRANJIT, Anothai, Phisanulok 65000 (TH); WICHAI, Uthai, Phisanulok 65000 (TH)
(74) Representative: Dehmel, Albrecht
(86) International application number: PCT/SG2008/000283
(87) International publication number: WO 2010/014038

(56) References cited:
- JP-A- 11 130 689
- US-A- 5 741 508
- US-A1- 2005 271 708
- US-A1- 2006 182 825
- DATABASE BIOSIS [Online] BIOSCIENCES INFORMATION SERVICE, PHILADELPHIA, PA, US; June 2007 (2007-06), AN B K ET AL: "Nutritional values of red pepper seed oil meal and effects of its supplementation on performances and physiological responses of broiler chicks", XP002711370, Database accession no. PREV200700384143 & ASIAN-AUSTRALASIAN JOURNAL OF ANIMAL SCIENCES, vol. 20, no. 6, June 2007 (2007-06), pages 971-975, ISSN: 1011-2367
- DATABASE FSTA [Online] INTERNATIONAL FOOD INFORMATION SERVICE (IFIS), FRANkFURT-MAIN, DE; HU ZHONGZE ET AL: "Comparison of effects to reduce cholesterol in eggs by several Chinese herbal medicines.", XP002711371, Database accession no. FS-2008-07-Qa0172 & HU ZHONGZE ET AL: "Comparison of effects to reduce cholesterol in eggs by several Chinese herbal medicines", CEREAL & FEED INDUSTRY, no. No. 12, 2007, pages 25-26,
- DATABASE BIOSIS [Online] BIOSCIENCES INFORMATION SERVICE, PHILADELPHIA, PA, US; September 2004 (2004-09), KURTOGLU V ET AL: "Effect of probiotic supplementation on laying hen diets on yield performance and serum and egg yolk cholesterol", XP002711372, Database accession no. PREV200500073146 & FOOD ADDITIVES AND CONTAMINANTS, vol. 21, no. 9, September 2004 (2004-09), pages 817-823, ISSN: 0265-203X
- PRIETO M T ET AL: "Effect of heat and several additives related to stress levels on fluctuating asymmetry, heterophil:lymphocyte ratio, and tonic immobility duration in White Leghorn chicks", POULTRY SCIENCE, vol. 89, 2010, pages 2071-2077, XP002711373,
- DATABASE FSTA [Online] INTERNATIONAL FOOD INFORMATION SERVICE (IFIS), FRANkFURT-MAIN, DE; CHEN Y C ET AL: "Effects of chicory fructans on egg cholesterol in commercial laying hen.", XP002711374, Database accession no. FS-2006-05-Qa0126 & INTERNATIONAL JOURNAL OF POULTRY SCIENCE, vol. 4, no. 2, 2005, pages 109-114,

## Description

### Field of Invention

The present invention relates generally to a feed for poultry. More specifically, the present invention relates to feed for poultry supplemented with capsaicin.

### Background

Food security is an essential basis of human welfare and of economic and political stability. Urbanization, rising income levels and population growth have changed the pattern of global food consumption considerably. There has been an increasing global demand for food of animal origin. Increasing affluence has contributed to increasing global demand for meat originating from poultry and other livestock such as swine. The increasing global demand for meat thereby increases pressure on meat producing countries to increase production and supply of meat to meet this increasing demand.

The increasing global demand for meat originating from poultry has caused massive changes in rearing or breeding practice of poultry. The 20^{th} century has seen the emergence of large-scale farming operations aimed at securing a high-throughput rearing or breeding of animals, such as poultry, for food. In such large-scale farming operations, the animals are typically reared in confinement or cages and fed defined feeds that are specifically formulated to increase growth rate and feed-conversion efficiency of the animals.

Feeds given to animals can influence the growth rate, feed-conversion efficiency and other characteristics of the animals being reared. Present day animal feeds typically comprise a wide variety of feed supplements (also known as feed additives) for enhancing the characteristics of the animal being reared. The feed supplements or additives are generally selected for their advantageous or beneficial effects on the animals to which they are given. For example, feed supplements that help increase or enhance the growth rate, feed-conversion efficiency and immunity of animals are generally welcomed by animal breeders. It should be noted that animal producers have to *purchase* the feed supplements, and hence the feed supplements should enable tangible or monetary returns (i.e. be cost effective) to the animal breeders. The market for feed supplements with advantageous or beneficial effects is already significant, and is set to grow rapidly with the rising demand for meat and other foods of animal-origin.

However, inclusion of certain chemicals or etiologic agents in animal feeds or feed supplements can potentially adversely affect quality and safety of animal-based food products, which in may in turn pose risks to human health. For example, previous introduction of Tetrachlorvinphos in poultry feed used for controlling poultry mites has been linked to toxicity in humans. In addition, introduction of rendered animals in feed for livestock, such as cattle, has been shown to cause the bovine spongiform encephalopathy (BSE) disease. It is apparent that selection of specific feeds or feed supplements is a challenging task. Feed supplements, and concentrations thereof, need to be carefully selected for enabling optimal benefits to the animals being reared while minimizing potential threats to animal or human well-being. An et al. ("Nutritional values of red pepper seed oil meal and effects of its supplementation on performances and physiological responses of broiler chicks," Asian-Australasian Journal of Animal Sciences, vol. 20, no. 6, June 2007 (2007-06), pp. 971-975, ISSN: 1011-2367) show that red pepper seed oil meal containing capsaisin and dihydrocapsaisin can be used to replace conventional corn- or soybean-based meal by up to 10% without adversely affecting broiler's performance. In experiments conducted by Prieto el al. ("Effect of heat and several additives related to stress levels on fluctuating asymmetry, heterophil:lymphocyte ratio, and tonic immobility duration in White Leghorn chicks," Poultry Science, vol. 89, 2010, pp. 2071-2077), feed containing capsaicin was proven to be effective in reducing heat related-stress in poultry.

It will therefore be appreciated that improvements or enhancements to feeds and feed supplements for animals, for example poultry, are increasingly important in light of the mounting pressure for their increased production and supply. Such improvements to animal feeds or feed supplements should not pose any significant health to human health.

### Summary

In accordance with a first aspect of the present invention, there is disclosed a feed for poultry comprising a supplement. The supplement is selected from a group consisting essentially of a predetermined concentration of Capsaicin and, optionally, a predetermined concentration of essential oil from *Ocimum sanctum L.* Aspects of the present invention are set forth in the appended claims. Another aspect of the present disclosure includes a feed for poultry comprising a supplement in the form of coated granules, the granules of the supplement comprising a mixture of starch and capsicum extract and a coating of 5% to 10% of hydroxy propyl methylcellulose. The supplement comprises a binding agent for forming the granule and contains 5 ppm to 20 ppm of capsaicin. The supplement may further comprise essential oil from *Ocimum sanctum L.,* which can be at a concentration of 20ppm in the supplement. The supplement may further comprise 25ppm to 125 ppm of Curcumin as well.

Another aspect of the present disclosure refers to a method for non-therapeutic treatment of poultry for reducing effects resulting from stress in poultry, the method comprising: orally administering a feed for poultry comprising a supplement, the supplement comprising capsicum extract. The feed for poultry contains substantially between and including 5 ppm and 20 ppm of capsaicin.

Another aspect of the present disclosure refers to a method for non-therapeutic treatment of poultry for increasing excretion of digestive enzymes in the duodenum, the method comprising: orally administering a feed for poultry comprising a supplement, the supplement comprising capsicum extract. The feed for poultry contains substantially between and including 5 ppm and 20 ppm of capsaicin.

### Detailed Description

There is an increasing worldwide demand for meat and other food of animal origin such as eggs. With mounting pressure due to rapidly increasing demand for meat and other food of animal origin, feeds and feed supplements for animals have become increasingly important for enhancing productivity and quality of animals reared. However, feeds and feed supplements comprising certain chemicals or etiologic agents have been known to adversely affect quality and health safety of animal-based food products. It will be appreciated by a person skilled in the art that improvements to feeds and feed supplements for animals, more specifically to composition of animal feeds and feed supplements, are important for enhancing the rearing or breeding productivity of such animals. This is to meet the increasing demand for meat and other food of animal origin. In addition, the improved animal feed and feed supplements should not pose any health risks to human.

For purposes of brevity and clarity, the description of the present invention is limited hereinafter to feeds and feed supplements for poultry, processes of manufacture of such feeds and feed supplements, as well as the physiological effects of such feeds and feed supplements on the animals to which they are given. This however, does not preclude various embodiments of the invention from other applications where fundamental principles prevalent among the various embodiments of the invention such as operational, functional or performance characteristics are required.

Exemplary embodiments of the present invention include feeds and feed supplements for poultry. The feed supplements of the present invention are preferably added into the feeds prior to consumption by the poultry. Preferably, the feed supplements for poultry comprise natural substances. The expression "natural substances" in this patent application can be understood as substances or compounds occurring in nature, obtained at least in part from natural products or synthesized through natural or non-artificial processes. Such "natural substances" have been said to be less likely to trigger adverse or allergic reactions when consumed as compared with artificial chemicals. Alternatively, at least one of the feed and the feed supplements comprises substances or components not classified as "natural substances".

### Capsaicin

Capsaicin is alternatively known as 8-methyl-N-vanillyl-trans-6-nonenamide, a name assigned by the International Union of Pure and Applied Chemistry (IUPAC). Capsaicin is the active ingredient or component of plants belonging to the genus *Capsicum.* Generally, Capsaicin is present in large quantities in placental tissue, internal membranes and, to a lesser extent, other fleshy parts of fruits of the plants in the genus *Capsicum.* Capsaicin comprises cis/trans isomerism as presence of double bonds in Capsaicin's chemical structure prevent internal rotation. Generally, Capsaicin naturally exists as a trans isomer due to steric hindrance of the cis isomeric configuration. When consumed, Capsaicin has been known to stimulate sensory neurons, thereby producing a 'hot' or 'burning' sensation.

Generally, predetermined concentrations of Capsaicin can be added in into feeds or feed supplements as a crude extract of *Capsicum* or as purified Capsaicin.

### Ocimum sauctum L.

*Ocimum sauctum* L. (also commonly known as *Ocimum tenuiflorum*) is a well-known aromatic plant in the family Lamiaceae (Mint family). The essential oil of *Ocimum sauctum* L. is obtained from leaves of *Ocimum sanctum* L.. Typically, the leaves of *Ocimum sauctum* L. further comprise tannins, for example gallic acid and chorogenic acid, alkaloids, glycosides and saponins along with the essential oil of *Ocimum sauctum* L.. The main constituents of the essential oil of *Ocimum sanctum* L. are β-bisabolene (at a concentration of 13-20%) 1,8-cineole (at a concentration of 9-33%) and methyl chavicol (at a concentration of 2-12%), specific concentrations of each constituent varying during development of the plant.

Exact chemical composition of the essential oil of *Ocimum sanctum* L. also depends on geographical region in which the plant is grown. The essential oil produced from *Ocimum sanctum* L. grown in Thailand typically comprises Eugenol, more specifically methyl Eugenol, as one of the main constituents.

### Curcumin

Curcumin is alternatively known as (1*E*, 6*E*)-1,7-bis (4-hydroxy-3-methoxyphenyl) - 1,6-heptadiene 3,5-dione under the IPUAC. Curcumin is a principal curcuminoid of turmeric. Curcumin is considered the active ingredient of Turmeric. Curcuminoids are polyphenols and are responsible for the yellow color of turmeric. Curcumin is brightly colored and is typically used as a food coloring. When used as a food additive, Curcumin is coded as E10.

Curcumin can exist in at least two tautomeric forms, namely a keto and an enol. The enol form of Curcumin is energetically more stable than the keto form of Curcumin, both in solid phase and in solution. Curcumin incorporates several functional groups. An important functional group of Curcumin comprises aromatic ring systems or polyphenols that are connected by two α,β-unsaturated carbonyl groups. The two carbonyl groups form a diketone which in turn form stable enols or are deprotonated to form enolates. The α,β-unsaturated carbonyl is a good Michael acceptor and enables Curcumin to undergo nucleophillic addition reactions.

An exemplary process or method for manufacture of the feed supplement is provided by the present invention. An embodiment of the feed supplement provided by the present invention comprises granules of Capsicum extract, which provides a predetermined concentration of Capsaicin (Capsaicin functions as the active ingredient). The predetermined concentration of Capsaicin provided by the granules of Capsicum extract is preferably substantially between and including 2.5 ppm and 40 ppm. Further preferably, the concentration of Capsaicin provided by the granules of Capsicum extract can be varied as required.

The feed supplement comprising granules of Capsicum extract can be added into the feed for poultry independently. Alternatively, the feed supplement comprising granules of Capsicum extract can be added into the feed together with one or more of the essential oil of *Ocimum sanctum* L., FOS and Curcumin. The relative concentrations of the essential oil of *Ocimum sanctum* L., FOS and Curcumin can be varied as required by methods known to a person skilled in the art.

It will be understood by a person skilled in the art that the predetermined or required concentrations of Curcumin in the feed or feed supplement can be obtained by mixing a corresponding required amount or concentration of Turmeric extract into the feed or feed supplement. Alternatively, the predetermined or required concentrations of Curcumin in the feed or feed supplement can be obtained by mixing purified Curcumin or Curcumin extract into the feed or feed supplement. Preferably, the predetermined concentration of Curcumin in the feed or feed supplement is substantially between and including 25ppm and 125ppm. The predetermined concentration of Curcumin can preferably be varied as required by methods known to a person skilled in the art.

A first step in the method for manufacture of the feed supplement is preferably mixing the crude extract of Capsicum with starch in a ratio of 1 to 4 by weight. The starch used preferably originates from corn, and is thereby known as corn starch. Alternatively, starches of other origins including, but not limited to, tapioca can be used. The ratio by weight of the crude extract of Capsicum to starch can be varied as required. Preferably, the ratio by weight of the crude extract of Capsicum to starch determines concentration of the active ingredient of Capsicum, Capsaicin, in the manufactured feed supplement.

The mixing of the crude extract of Capsicum with starch is also known as granulation and preferably results in formation of granules of Capsicum extract. The granules of Capsicum extract is preferably quantitatively analysed for determining concentration of Capsaicin provided. Information gathered by the quantitative analysis can be used for altering the ratio by weight of the crude extract of Capsicum to starch. As previously mentioned, adjusting the ratio by weight of the crude extract of Capsicum to starch alters the concentration of Capsaicin provided in the feed supplement.

In a subsequent step of the method for manufacture of the feed supplement, binding agents are added to the granules of Capsicum extract. Preferably, the binding agents comprise Polyvinyl-pyrrolidone K 90 (PVPK 90) and starch paste. Further preferably, the PVPK 90 and the starch paste are suspended in water in concentrations of 10% and 5% weight/volume respectively before their addition to the granules of Capsicum extract. The concentrations of PVPK 90 and starch paste can be varied as required. Alternatively, other binding agents known to a person skilled in the art can also be used. Preferably, the binding agents are selected for generating or obtaining a damp mass of granules of Capsicum extract or feed supplement.

After the addition of binding agents to the granules of Capsicum extract, the granules of Capsicum extract are then coated with hydroxy-propy-methylcellulose. Preferably, the addition and presence of binding agents as described above facilitates the coating of the granules of Capsicum extract with hydroxy-propy-methylcellulose. Further preferably, the addition and presence of the above-specified concentrations of binding agents facilitates the coating of the granules of Capsicum extract with hydroxy-propy-methylcellulose.

Preferably, the granules of Capsicum extract are coated with a concentration of 5% to 10% of hydroxy-propy-methylcellulose. The coating of hydroxy-propy-methylcellulose preferably helps to mask the taste or 'burning' sensation caused by Capsaicin when consumed by the animal. In other words, the coating of hydroxy-propy-methylcellulose preferably enhances palatability of feed supplements, and of feeds comprising the feed supplements, for poultry.

Although the exemplary process or method for manufacture of the feed supplement as described above results in the manufacture of feed supplement comprising granules of Capsicum extract, which are coated with hydroxy-propy-methylcellulose, for providing predetermined concentrations of Capsaicin, it will be appreciated by a person skilled in the art that any one or more of the essential oil of *Ocimum sanctum* L., FOS and Curcumin can be included in the feed supplement and subsequently added into the feed. In addition, the concentrations of the any one or more of the essential oil of *Ocimum sauctum* L., FOS and Curcumin in the feed supplement can be varied as required by methods known to a person skilled in the art.

Exemplary embodiments of the feeds and feed supplements for poultry provided by the present invention have beneficial or advantageous physiological effects on the poultry when consumed thereby.

Examples of beneficial or advantageous physiological effects when the feeds or feed supplements are consumed by poultry include:
(a) Reduction in egg yolk cholesterol content of eggs produced by layers (also referred to as laying hens)
(b) Enhanced resistance to stress conditions in broilers (i.e. chickens that are specifically bred for meat production)
(c) Increase immunity of broilers against Newcastle disease
(d) Increase excretion of digestive enzyme, such as proteases and lipases, in duodenum of broilers

Preferably, the beneficial physiological effects on poultry occurs when the feeds or feed supplements comprises a certain predetermined mix or composition and concentration of at least one of Capsaicin, the essential oil of *Ocimum sanctum* L., FOS and Curcumin.

Experimental data showing the various beneficial physiological effects to poultry caused by the consumption of the feeds and feed supplements provided by the present invention by the poultry is provided below.

### Poultry

### Example 1: Exemplary feed for reduction of Cholesterol in eggs produced by layers

Cholesterol is vital to ensure the body's normal function. Cholesterol is an essential component of the outer membrane that surrounds each cell in the body and is also used to insulate nerve fibers. In addition, cholesterol is a building block of hormones, which are used to transmit chemical signals around the body. However, high intake of cholesterol has been associated with increased risk of cardiovascular diseases, such as coronary heart disease and disease of arteries.

Eggs, more specifically egg yolks, contain dietary cholesterol. A typical chicken egg has approximately 200mg of cholesterol, depending in part on weight of the egg. It has been shown that high consumption of eggs can lead to high levels of cholesterol in the body, and hence to increased risk of cardiovascular diseases. It should therefore be appreciated that eggs with reduced cholesterol content will potentially command a higher consumer demand and consequently a higher value.

For purposes of the present invention, one hundred and sixty Rohmann Brown breed layers (also known as laying hens) were used. Effect of feeds or feed supplements comprising predetermined concentrations of Capsaicin on egg-yolk cholesterol content of eggs produced by the layers was obtained and studied.

The one hundred and sixty Rohmann Brown breed layers were divided into four groups with four replications of each of the four groups. Each replicate consists of ten layers. Two layers were kept per cage in an evaporative housing system where feed and water were provided ad libitum. The animals were randomized and fed one of four experimental feeds as listed below:
(a) Control feed
(b) Control feed + Coated Capsicum crude extract providing 20ppm Capsaicin
(c) Control feed + Coated Capsicum crude extract providing 30ppm Capsaicin
(d) Control feed + Coated Capsicum crude extract providing 40ppm Capsaicin

Components or composition of the control feed for layers are shown in Table 1 as provided below. It will be appreciated by a person skilled in the art that the precise components or compositions of the control feed, as well as the relative amounts of each component of the control feed, can be varied as required.

**Table 1: Feed components of control feed for layers**

| **Feed ingredient** | **Amount in the feed (%)** |
|---|---|
| Corn | 58.63 |
| Broken rice | 3.75 |
| Wheat bran | 1.00 |
| Leucaena meal | 3.50 |
| Soybean meal (47% protein) | 21.92 |
| Calcium carbonate | 8.66 |
| Monodicalciumphosphate (P21) | 1.92 |
| Salt | 0.29 |
| DL-methionine | 0.08 |
| Vitamin/minerals premix | 0.25 |
| **Total** | **100.00** |

Four periods (28 days in each period) of egg collection were performed. The eggs were randomized and their egg yolk cholesterol content were analysed using the method described by the teachings in Abell *et al.* and Will and Greenfield.

It was found that eggs from layers fed with feeds supplemented with predetermined concentrations of Capsaicin (or feeds comprising feed supplements providing the predetermined concentrations of Capsaicin) had significantly reduced egg yolk cholesterol content. Increasing the Capsaicin concentration in the feed or feed supplement also facilitates reduction in egg yolk cholesterol content of layers. A summary of the results obtained is shown in Table 2.

**Table 2: Effect of feed comprising Capsaicin on egg yolk cholesterol content**

| **Feed** | **Egg yolk cholesterol (mg/egg)** |
|---|---|
| Control feed (C) | 180.80^{a} ± 7.26 |
| C + 20 ppm capsaicin | 167.86^{b} ± 15.64 |
| C + 30 ppm capsaicin | 125.73^{c} ± 9.88 |
| C + 40 ppm capsaicin | 116.58^{c} ± 9.22 |

### Example 2: Exemplary feed for enhanced prevention of stress effects in broilers

Animal production typically involves stress conditions, which can significantly affect productivity and health of the animals. Reducing the stress conditions or stress levels of animals can help enhance the productivity and health of the animals.
For purposes of the prevent invention, 1200 broilers were used to study the effect of Capsaicin, and of Capsaicin together with the essential oil of *Ocimum sanctum L.,* on specified stress effects in broilers when consumed thereby.

More specifically, the stress effects studied or analysed included:
(a) Amount of free radical production, more specifically amount of serum thiobarbituric acid reactive substances (TBARs)
(b) Ratio of heterophil to lymphocyte (heterophil: lymphocyte ratio)
(c) Villus height and jejunum morphology as an indication of the amount of lipid peroxidation of the intestinal epithelial cell

Free radicals are produced as a result of stress in broilers. Increasing amounts of free readicals in broilers is an indication of increasing stress levels thereof. The production or generation of free radicals is associated with a lower productivity and reduced immunity against diseases in broilers. The ratio of heterophil to lymphocyte serves as a measure of stress level in broilers. A higher heterophil to lymphocyte ratio is an indication of an increased stress level in broilers. Lipid peroxidation is also in direct relationship to level of stress in broilers. Increasing the level of stress in broilers causes increasing lipid peroxidation in the jejunum of broilers, thereby resulting in poorer jejunum morphology and reduced villi height.

The influence of six different experimental feeds (the six different experimental feeds being that listed above) on the stress effects as listed above is obtained and studied for purposes of the present invention.

The 1200 broilers were divided into six groups, each group being replicated five times. Each replicate group consists of 40 broilers with an equal number of male and female broilers. The broilers were randomized and fed one of the six experimental feeds for 42 days. The six experimental feeds are as listed below:
(a) Control feed
(b) Control feed + Coated Capsicum crude extract providing 5ppm Capsaicin
(c) Control feed + Coated Capsicum crude extract providing 10ppm Capsaicin
(d) Control feed + Coated Capsicum crude extract providing 15ppm Capsaicin
(e) Control feed + Coated Capsicum crude extract providing 20ppm Capsaicin
(f) Control feed + Coated Capsicum crude extract providing 5ppm Capsaicin + 20ppm essential oil of *Ocimum sanctum L.*

Feed components or composition of the control feed for broilers are shown in Table 3 as provided below. It will be appreciated by a person skilled in the art that the precise components or compositions of the control feed, as well as the relative amounts of each component of the control feed, can be varied as required.

**Table 3: Feed components of the control feed for broilers**

| **Feed ingredient** | **1-21 days of age (%)** | **22-42 days of age (%)** |
|---|---|---|
| Corn | 56.45 | 60.75 |
| Soybean meal (44% protein) | 25.50 | 25.00 |
| Full fat soybean | 5.00 | 3.00 |
| Fish meal (60% protein) | 7.50 | 5.00 |
| Soybean oil | 3.30 | 3.50 |
| Calcium carbonate | 0.30 | 0.50 |
| Monodicalciumphosphate (P21) | 0.75 | 1.00 |
| Salt | 0.25 | 0.30 |
| DL-methionine | 0.20 | 0.20 |
| Vitamin/minerals premix | 0.75 | 0.75 |
| **Total** | **100.00** | **100.00** |

After 42 days, blood was collected from four randomized broilers from each replicate group. White blood cell count for determining ratio of heterophil to lymphocyte was performed using the method described by Silakij, C. The amount of free radicals (the free radicals being TBARs) was measured using the method described in Asakawa and Matsushita. The amount or extent of lipid peroxidation was determined using the method disclosed by Uchiyama and Mihara.

It was found that feeds comprising predetermined concentrations of Capsaicin as well as feeds comprising predetermined concentrations of Capsaicin together with the essential oil of *Ocimum sanctum L.* aid prevention of the stress effects, as listed above, in the broilers. More specifically, the above feeds, when consumed by the broilers, resulted in:
(a) Decreased free radical (in terms of serum TBARs)
(b) Reduced heterophil to lymphocyte ratio; and
(c) Increased villus height and enhanced morphology of jejunum.

A summary of the results obtained, the results showing the effects of the feeds on prevention of stress effects of broilers when the feeds are consumed thereby, is shown in Table 4 as provided below.

**Table 4: Effect of feeds comprising Capsaicin and Capsaicin + essential oil of Ocimum sanctum L. on prevention of effects due to stress**

| **Feed** | **Serum-TBARs (nmol/ml.)** | **Heterophil to Lymphocyte ratio** | **Villus height (µ) at 42 days** |
|---|---|---|---|
| Control (C) | 0.63^{a} ±0.35 | 0.78^{a}±0.32 | 768.2^{ab}± 176.8 |
| C + 5 ppm capsaicin | 0.34^{bcd}±0.48 | 0.54^{ab}±0.42 | 776.4^{ab} ±158.0 |
| C + 10 ppm capsaicin | 0.36^{bc} ±0.41 | 0.56^{ab}±0.25 | 841.9^{a} ±148.1 |
| C + 15 ppm capsaicin | 0.32^{bcd}±0.35 | 0.49^{b}±0.45 | 745.4^{b} ±91.6 |
| C + 20 ppm capsaicin | 0.12^{cd}±0.28 | 0.58^{ab}±0.32 | 748.1^{b} ±98.6 |
| C + 5 ppm capsaicin + 20 ppm essential oil of *Ocimum sanctum L.* | 0.21^{bcd}±0.37 | 0.59^{ab}±0.31 | 790.7^{ab} ±126.3 |

### Example 3: Exemplary feed for enhanced immunity of broilers against Newcastle disease

Newcastle disease is a highly contagious zoonotic disease that affects the digestive, respiratory and/or nervous systems of domestic poultry, cage and aviary birds, and wild birds. Newcastle disease is caused by a virus of the family Paramyxoviridae, genus *Rubulavirus.*

Due to a high susceptibility to Newcastle disease of domestic poultry, there is potential for a significant negative impact caused by an epidemic of the disease on poultry industries. Severity of symptoms or effects caused by Newcastle disease depends on strain of virus as well as the age and health of the animal. Symptoms typically include respiratory signs (e.g. gasping), nervous signs (e.g. depression, paralysis), swelling of the eyes and neck diarrhoea, misshapen, rough- or thin-shelled eggs and reduced egg production. Transmission of the Newcastle disease occurs by exposure to faecal and other excretions from infected birds, and through contact with contaminated feed, water, equipment and clothing. No treatment for Newcastle disease is currently known, but use of prophylactic vaccines and sanitary measures is known to reduce the likelihood of outbreaks.

Strains of the virus causing Newcastle disease can be categorized as velogenic, mesogenic or lentogenic. Velogenic strains produce severe nervous and respiratory signs, spread rapidly, and cause up to 90% mortality. Mesogenic strains cause coughing, affect egg quality and production, and result in up to 10% mortality in poultry. Lentogenic strains produce mild signs with negligible mortality in poultry. Exposure of humans to infected birds can cause mild conjunctivitis and influenza-like symptoms in humans.

Exemplary feeds provided by the present invention have been shown to enhance the immune or immune system of broilers against Newcastle disease. Preferably, the exemplary feed comprises a predetermined concentration of Capsaicin. Alternatively, the exemplary feed comprises a predetermined concentration of Capsaicin together with a predetermined concentration of the essential oil of *Ocimum sanctum L..*

1200 broilers were divided into six groups, each group being replicated five times and each replicate group consisting of 40 broilers with equal numbers of male and female broilers. The broilers were randomized and fed one of six experimental feeds for 42 days. The six experimental feeds are as listed below:
(a) Control feed
(b) Control feed + Coated Capsicum crude extract providing 5ppm Capsaicin
(c) Control feed + Coated Capsicum crude extract providing 10ppm Capsaicin
(d) Control feed + Coated Capsicum crude extract providing 15ppm Capsaicin
(e) Control feed + Coated Capsicum crude extract providing 20ppm Capsaicin
(f) Control feed + Coated Capsicum crude extract providing 5ppm Capsaicin + 20ppm essential oil of *Ocimum sanctum L.*

Effect of the feeds on the immune of the broilers against Newcastle disease, when the feed is consumed by the broilers, is determined using the Haemagglutination Inhibition (HI) Test. The HI test is a test to detect the presence of a specified haemagglutinating virus or other haemagglutinating antigens. The presence of the specified haemagglutinating virus or other haemagglutinating antigens in a sample causes red blood cells in the sample to lose their ability to clump or stick together when an antibody to the specified haemagglutinating virus or haemagglutinating antigen is added.

It was found that the feed provided by the present invention enhances the immune of broiler against Newcastle disease. More specifically, the feed comprising 5 ppm of Capsaicin has been shown to increase the HI titer against the virus for Newcastle disease as compared to the control feed. The increased HI titer against the virus for Newcastle disease indicates an enhanced immune of the broiler against Newcastle disease.

A summary of the effects of feeds comprising Capsaicin, or Capsaicin together with the essential oil of *Ocimum sanctum L.,* on the immune of broilers against the Newcastle disease is provided in Table 5.

**Table 5: Effect of feeds comprising Capsaicin and Capsaicin + essential oil of Ocimum sanctum L. on the immune titer against Newcastle disease**

| **Treatment** | **log₂HI-titer** |
|---|---|
| Control (C) | 2.10^{d} ±1.07 |
| **C + 5 ppm capsaicin** | **6.60^{a} ±2.56** |
| C + 10 ppm capsaicin | 4.10^{b} ±1.62 |
| C + 15 ppm capsaicin | 3.65^{bc} ±2.08 |
| C + 20 ppm capsaicin | 3.30^{bc} ±1.26 |
| C + 5 ppm capsaicin + 20 ppm essential oil | 1.75^{d} ±0.97 |

### Example 4: Exemplary feed for increased digestive enzymes excretion in broilers

Increased excretion of digestive enzymes in the duodenum of broilers is generally advantageous or beneficial. This is because digestive enzymes, such as lipases and proteases, are essential for feed conversion and growth of broilers. Therefore, increasing the excretion of such digestive enzymes generally enhances feed conversion rate and growth of broilers.

As with example 2 and example 3, 1200 broilers were divided into six groups, each group being replicated five times and each replicate group consisting of 40 broilers with equal numbers of male and female broilers. The broilers were randomized and fed one of six experimental feeds for 42 days. The six experimental feeds are as listed below:
(a) Control feed
(b) Control feed + Coated Capsicum crude extract providing 5ppm Capsaicin
(c) Control feed + Coated Capsicum crude extract providing 10ppm Capsaicin
(d) Control feed + Coated Capsicum crude extract providing 15ppm Capsaicin
(e) Control feed + Coated Capsicum crude extract providing 20ppm Capsaicin
(f) Control feed + Coated Capsicum crude extract providing 5ppm Capsaicin + 20ppm essential oil of *Ocimum sanctum L.*

Duodenal digesta were collected from each of the broilers after 42 days to determine amount of duodenal enzyme excretion or activities, more specifically amount of excretion of lipases and proteases. The amount of duodenal excretion or activity of lipases was determined following the protocol described in Lotrakul and Dharmsthiti and the duodenal excretion or activity of proteases was determined following the protocol described in Anson.

It has been found that consumption of the feeds provided by the present invention by the broilers increases duodenal enzymes excretion (unit/gram of duodenal digesta) of the broilers. More specifically, consumption of the feeds comprising predetermined concentrations of Capsaicin or predetermined concentrations of Capsaicin together with predetermined concentrations of essential oil of *Ocimum sanctum L.* by the broilers increases duodenal excretion of at least one of lipases and proteases.

A summary of the effects of feeds comprising Capsaicin, and of feeds comprising Capsaicin together with the essential oil of *Ocimum sanctum L.,* on duodenal enzymes excretion of broilers when consumed thereby is provided in Table 6.

**Table 6: Effect of feeds comprising Capsaicin and Capsaicin + essential oil of Ocimum sanctum L. on the duodenal enzyme (lipase and protease) excretion**

| **Treatment** | **Duodenal enzyme activity (unit/g of duodenal digesta)** | |
|---|---|---|
| | Lipases | Proteases |
| Control (C) | 26.34^{d}±2.17 | 18.57^{c}± 0.93 |
| C + 5 ppm capsaicin | 35.43^{c}±2.99 | 23.33^{b}± 1.67 |
| C + 10 ppm capsaicin | 39.77^{ab}±3.98 | 24.50^{ab}±0.96 |
| C + 15 ppm capsaicin | 37.75^{bc}±2.27 | 24.05^{ab}±0.92 |
| C + 20 ppm capsaicin | 42.83^{a}±3.17 | 25.44^{a}±1.48 |
| C + 5 ppm capsaicin + 20 ppm essential oil | 40.86^{ab}±1.37 | 23.60^{b}±1.10 |

### References

Abell, L.L., B.B. Levy., B.B. Brodie and F.E. Kendall. 1952. A simplified method for the estimate of total cholesterol in serum. J. Biol. Chem. 195: pages 357-366
Anson, M.L. 1938. The estimation of pepsin, trypsin, papain and cathepsin with hemoglobin. J. of General Physiology. 22: pages 79-89
Asakawa, T. and S. Matsushita. 1980. Coloring conditions of thiobarbituric acid test for detecting lipid hydroperoxides. Lipids. 15: pages 137-140
Berfeld, P. 1955. Amylase. In: S.P. Colowick and N.O. Kaplan. (eds.). Methods in Enzymology. Academic Press, New York. pages 149-158.
Lotrakul, P. and S. Dharmsthiti. 1997. Lipase production by Aeromonas sobria LP004 in a medium containing whey and soybean meal. World Journal of Microbiology and Biotechnology. 13: pages 163-166
Silakij, C. 1997. Veterinary Hematology. Auksornsamai Print, Bangkok. Page 211.
Uchiyama, M. and M. Mihara. 1978. Determination of malonaldehyde precursor in tissues by thiobarbituric acid test. Analytical Biochemistry. 86: pages 271-278
Welly, J.A., P.M. Richalet-Secordel and M.H.V. van Regenmortel. 1994. Immunochemistry of viral antigens, pp. 455-473 In C.J. van Oss and M.H.V. van Regenmortel, eds. Immunochemistry. Marcel Dekker, Inc., New York, USA. 753 p.
Will, R.B.H. and H. Greenfild. 1984. Laboratory instruction Manual for Composition Studies. Department of Food Science and Technology, The University of New South Wales.

## Claims

1. A feed for poultry comprising a supplement in the form of coated granules, the granules of the supplement comprising a mixture of starch and capsicum extract and a coating of 5% to 10% of hydroxy propyl methylcellulose, wherein the supplement comprises a binding agent for forming the granule and contains 5 ppm to 20 ppm of capsaicin.

2. The feed for poultry as in claim 1, wherein the supplement further comprises essential oil from *Ocimum sanctum L.*

3. The feed for poultry as in claim 2, wherein the essential oil from *Ocimum sanctum L.* is at a concentration of 20ppm in the supplement.

4. The feed for poultry as in claims 1 or 2, wherein the supplement further comprises 25ppm to 125 ppm of Curcumin.

5. The feed for poultry as in claim 1, wherein the capsicum extract and starch are in a quantity ratio of 1: 4 by weight.

6. The feed for poultry as in claim 1, wherein the supplement further comprises Polyvinylpyrrolidone K 90 and starch paste.

7. A method for non-therapeutic treatment of poultry for reducing effects resulting from stress in poultry, the method comprising: orally administering a feed for poultry comprising a supplement, the supplement comprising capsicum extract, wherein the feed for poultry contains substantially between and including 5 ppm and 20 ppm of capsaicin.

8. A method for non-therapeutic treatment of poultry for increasing excretion of digestive enzymes in the duodenum, the method comprising: orally administering a feed for poultry comprising a supplement, the supplement comprising capsicum extract, wherein the feed for poultry contains substantially between and including 5 ppm and 20 ppm of capsaicin.

## Patentansprüche

1. Ein Futtermittel für Geflügel umfassend ein Ergänzungsmittel in der Form von beschichteten Granulaten, die Granulate des Ergänzungsmittels umfassend ein Gemisch von Stärke und Capsicum-Extrakt und eine Beschichtung aus 5 % bis 10 % Hydroxypropylmethylcellulose, wobei das Ergänzungsmittel ein Bindemittel zur Bildung des Granulats umfasst und 5 ppm bis 20 ppm Capsaicin enthält.

2. Das Futtermittel für Geflügel wie in Anspruch 1, wobei das Ergänzungsmittel ferner ätherisches Öl aus *Ocimum sanctum L.* umfasst.

3. Das Futtermittel für Geflügel wie in Anspruch 2, wobei das ätherische Öl von *Ocimum sanctum L.* in einer Konzentration von 20 ppm im Ergänzungsmittel ist.

4. Das Futtermittel für Geflügel wie in den Ansprüchen 1 oder 2, wobei das Ergänzungsmittel ferner 25 ppm bis 125 ppm von Curcumin umfasst.

5. Das Futtermittel für Geflügel wie in Anspruch 1, wobei der Capsicum-Extract und die Stärke in einem Mengenverhältnis von 1:4 nach Gewicht sind.

6. Das Futtermittel für Geflügel wie in Anspruch 1, wobei das Ergänzungsmittel ferner Polyvinylpyrrolidon K 90 und Stärkeleim umfasst.

7. Ein Verfahren zur nicht-therapeutischen Behandlung von Geflügel zur Reduzierung von Effekten resultierend aus Stress in Geflügel, das Verfahren umfassend: orales Verabreichen eines Futtermittels für Geflügel umfassend ein Ergänzungsmittel, das Ergänzungsmittel umfassend Capsicum-Extrakt, wobei das Futtermittel für Geflügel im Wesentlichen zwischen und einschließlich 5 ppm und 20 ppm Capsaicin enthält.

8. Ein Verfahren zur nicht-therapeutischen Behandlung von Geflügel zur Steigerung der Exkretion von Verdauungsenzymen in den Zwölffingerdarm, das Verfahren umfassend: orales Verabreichen eines Futtermittels für Geflügel umfassend ein Ergänzungsmittel, das Ergänzungsmittel umfassend Capsicum-Extrakt, wobei das Futtermittel für Geflügel im Wesentlichen zwischen und einschließlich 5 ppm und 20 ppm Capsaicin enthält.

## Revendications

1. Aliment pour volaille comprenant un complément sous la forme de granulés enrobés, les granulés du complément comprenant un mélange d'amidon et d'extrait de capsicum et un enrobage constitué de 5 % à 10 % d'hydroxypropylméthyl-cellulose, dans lequel le complément comprend un agent de liaison pour former le granulé et contient de 5 ppm à 20 ppm de capsaïcine.

2. Aliment pour volaille selon la revendication 1, dans lequel le complément comprend en outre une huile essentielle issue d'*Ocimum sanctum L.*

3. Aliment pour volaille selon la revendication 2, dans lequel l'huile essentielle issue *d'Ocimum sanctum L.* est à une concentration de 20 ppm dans le complément.

4. Aliment pour volaille selon les revendications 1 ou 2, dans lequel le complément comprend en outre de 25 ppm à 125 ppm de curcumine.

5. Aliment pour volaille selon la revendication 1, dans lequel l'extrait de capsicum et l'amidon sont dans un rapport en quantité de 1:4 en poids.

6. Aliment pour volaille selon la revendication 1, dans lequel le complément comprend en outre de la polyvinylpyrrolidone K90 et de l'amidon en pâte.

7. Méthode de traitement non thérapeutique de la volaille destinée à réduire les effets résultant du stress chez la volaille, la méthode comprenant: l'administration par voie orale d'un aliment pour volaille comprenant un complément, le complément comprenant un extrait de capsicum, dans laquelle l'aliment pour volaille contient sensiblement entre 5 ppm et 20 ppm, limites comprises, de capsaïcine.

8. Méthode de traitement non thérapeutique de la volaille destinée à accroître l'excrétion des enzymes digestives dans le duodénum, la méthode comprenant: l'administration par voie orale d'un aliment pour volaille comprenant un complément, le complément comprenant un extrait de capsicum, dans laquelle l'aliment pour volaille contient sensiblement entre 5 ppm et 20 ppm, limites comprises, de capsaïcine.
